(19) Europäisches Patentamt
European Patent Office
Office européen des brevets

(11) **EP 2 321 947 B1**

(12) **EUROPEAN PATENT SPECIFICATION**

(45) Date of publication and mention
of the grant of the patent:
**01.03.2017 Bulletin 2017/09**

(51) Int Cl.:
***H04L 29/06*** *(2006.01)*

(21) Application number: **09786110.8**

(22) Date of filing: **05.08.2009**

(86) International application number:
**PCT/IB2009/006465**

(87) International publication number:
**WO 2010/015918 (11.02.2010 Gazette 2010/06)**

(54) **METHOD AND APPARATUS FOR CREATING AN INSTANCE ID BASED ON A UNIQUE DEVICE IDENTIFIER**

VERFAHREN UND VORRICHTUNG ZUR ERSTELLUNG EINER IDENTITÄT BASIEREND AUF EINER EINDEUTIGEN GERÄTEKENNUNG

PROCÉDÉ ET DISPOSITIF POUR CRÉER UN IDENTIFIANT D' INSTANCE BASÉ SUR UN IDENTIFIANT UNIQUE DE TERMINAL

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **07.08.2008 US 86908 P**
**04.12.2008 US 328284**

(43) Date of publication of application:
**18.05.2011 Bulletin 2011/20**

(73) Proprietor: **Telefonaktiebolaget LM Ericsson (publ)**
**164 83 Stockholm (SE)**

(72) Inventors:
• **SCHNEYER, Sean, Kendall**
**The Colony**
**TX 75056-7308 (US)**
• **HEIDERMARK, Alf**
**S-133 43 Saltsjobaden (SE)**
• **LINDHOLM, Fredrik**
**S-125 74 Älvsjö (SE)**

(74) Representative: **Hoffmann Eitle**
**Patent- und Rechtsanwälte PartmbB**
**Arabellastraße 30**
**81925 München (DE)**

(56) References cited:
**EP-A1- 1 737 192      EP-A2- 1 843 547**
**US-A1- 2008 123 625**

**Description**

**BACKGROUND**

As used herein, the following abbreviations shall have the following meanings:

| | |
|---|---|
| CS: | Circuit Switched |
| CSCF: | Call Session Control Function |
| ESN: | Electronic Serial Number |
| GRUU: | Globally Routable User Agent (UA) URIs |
| I-CSCF: | Interrogating CSCF |
| ICS: | IMS Centralized Services |
| ID: | Identifier |
| IMEI: | International Mobile Equipment Identity |
| IMS: | IP Multimedia Subsystem |
| IP: | Internet Protocol |
| MEID: | Mobile Equipment Identifier |
| MSC: | Mobile Switching Center |
| NAI: | Network Access Identifier |
| NSS: | Name Space Specific string |
| P-CSCF: | Proxy CSCF |
| PS: | Packet Switched |
| S-CSCF: | Serving CSCF |
| SCC AS: | Service Centralization and Continuity Application Server |
| SIP: | Session Initiation Protocol |
| SNR: | Serial Number |
| TAC: | Type Allocation Code |
| UA: | User Agent |
| UE: | User Equipment |
| URI: | Uniform Resource Identifiers |
| UUID: | Universally Unique Identifier |

In SIP-based systems, such as IMS, it would be desirable to target a request to a specific device, such as, but not limited to, a mobile telephone, terminal, UE, fixed line terminal, or software based client (sometimes referred to herein as a "device"). For example, when transferring a call, it might be desirable to target a specific device such as a mobile telephone.

In order to achieve this, a Globally Routable User Agent (UA) URI (GRUU) is assigned to the device by the registrar (which is the S-CSCF in an IMS system). In order to properly assign the GRUU, the registrar uses an Instance ID that is provided by the device during registration.

The Instance ID is used by the registrar to generate the actual GRUU. The most common approach is to use the Instance ID as the "gr" parameter of the GRUU.

The current IMS specification assumes that the device being targeted with the GRUU is performing the registration. However, with the introduction of IMS Centralized Services (ICS) it is possible for the network to register in IMS on behalf of the device when the device is using CS access. In the case of ICS, the MSC Server is the network entity that registers on behalf of the CS subscriber.

Because an ICS device may also be able to register directly in IMS when it is using PS access, it is desirable that the Instance ID that is used by the network be identical to the Instance ID that is used by the device when performing registration. This ensures that the same GRUU is assigned to the device.

The current IMS specification does not provide any specific guidance on how the device or the network shall create the Instance ID. The only guidance that is provided is that the Instance ID must match the format described in the IETF Outbound draft. Therefore, the current IMS specification does not ensure that the Instance ID used by the network will match the Instance ID used by the device.

Additionally, the current IMS specification does not provide any guidance on how the registrar shall generate the GRUU from the Instance ID. This can lead to the generation of different GRUUs depending on which S-CSCF is assigned during registration if different S-CSCF vendors choose to generate the GRUU in different ways.

It has been proposed to directly use, as the Instance ID, an already existing equipment identity from the terminal, such as the IMEI. However, if the S-CSCF were to use the Instance ID unchanged as the GRUU, then this would expose the DevID to other users during session establishment. This could be considered a privacy violation and could be used to clone the equipment. Therefore there are disadvantageous to directly using an existing device identity such as the IMEI as the Instance ID.

EP 1 737 192 A describes an exchange and use of globally unique device identifiers for circuit-switched and packet switched integration. In particular, a system and method of exchanging GRUUs between a first telephony-enabled device and a second telephony enabled device using a circuit-switched message is provided. Once exchanged, the telephony enabled devices can exchange SIP communications routed by the GRUUs. Any one of the telephony-enabled devices can add a media component to the SIP communications. Also a system and method of generating GRUUs using an Instance ID and an address of record is provided.

EP 1 843 547 A2 teaches a method, system and user equipment in a combination of a CS call and an IMS session. In particular, a method and system of providing an unambiguous connection between a first user equipment and a second user equipment in a combination of a circuit switched call and a packet switched multimedia session is provided. The method comprises to construct an equipment identifier by a first user equipment, wherein the equipment identifier distinguishes the first user equipment from any other user equipment of a same user and comprises a uniform resource name. Further, the first user equipment is registered in a session control protocol environment by sending the equipment identifier to a session control protocol registrar. In addition, a uniform resource identifier is returned by the session control protocol registrar, wherein the uniform resource identifier routes to a session control protocol application, and wherein the uniform resource identifier includes the equipment identifier as an opaque parameter. Finally, the opaque parameter is advertised by the first user equipment in a circuit switched call.

US 2008/123625 A1 discloses a system and method for managing call continuity in IMS network environment. In particular, a scheme is disclosed for managing call continuity in a network environment including a circuit-switched network and an IP multimedia subsystem (IMS) network wherein unique identity information supplied by a user equipment device is utilized. A pool of dynamically allocable IP multimedia routing numbers (IMRNs) maintained at an IMS network node are used for associating an IMRN with call information received from the UE device, which can include at least one of a GRUU, Instance ID, and the called party number relating to a call. When the dynamically allocated IMRN is returned by the UE device, the network node utilizes the IMRN mapping to effectuate call continuity with respect to the called party.

**SUMMARY**

The following presents a summary of the present invention in order to provide a basic understanding of some aspects thereof. This summary is not an exhaustive overview of the present invention. It is not intended to identify key or critical elements of the invention or to delineate the scope of the invention. Its sole purpose is to present some concepts in a simplified form as a prelude to the more detailed description that is discussed later.

The present invention describes a process for creating Instance IDs that are consistent, whether they are created by the device or by the network, while at the same time providing privacy and security.

To ensure consistency, the creation of the Instance ID is based on the method according to the features as outlined in independent claims 1 and 2. Respective preferred embodiments are defined in the respective dependent claims. Further, the apparatus for signalling between a device and network comprises all features as defined in independent claims 8 and 9. Further preferred embodiments are defined in the respective dependent claims.

Optimally, the Instance ID would not contain information about the DevID passed as unencrypted plaintext. However, because it may not be possible to mandate that the UE protect the Instance ID as described herein, it is necessary to also describe procedures for the registrar to provide some level of protection. Therefore, the present invention describes an alternative approach that can be used to provide a level of privacy even when the DevID is initially sent unprotected during registration.

Therefore, the present invention claims two approaches for addressing privacy concerns: (1) defining a mechanism for creating an Instance ID which does not reveal any information about the actual DevID. This allows the Instance ID to be directly used as the "gr" parameter of the GRUU, and (2). defining a mechanism where, if the Instance ID contains the DevID plaintext in the clear, that the registrar manipulates the Instance ID in order to generate the "gr" parameter of the GRUU. This provides privacy for DevID in non-registration signaling from the UE.

**BRIEF DESCRIPTION OF THE DRAWINGS**

In the following section, the present invention will be described with reference to exemplary embodiments illustrated in the Figures, in which:

Figure 1 is a table illustrating the UUID String Representation;
Figure 2 is a table illustrating a name space definition for IMEI or other device ID based UUID creation;
Figure 3 illustrates the IMEI Structure;

Figure 4 illustrates the IMEISV Structure;

Figure 5 illustrates the MEID Structure;

Figure 6 is a message flow chart illustrating a device registration with protected DevID in Instance ID;

Figure 7 is an example REGISTER with instance ID (sip.instance);

Figure 8 is a message flow chart illustrating a network registration on behalf of a CS UE with protected DevID in Instance ID;

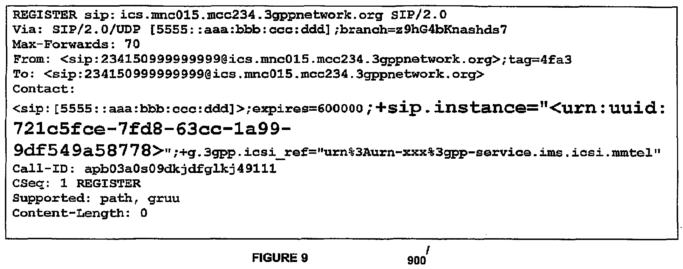

Figure 9 is an Example REGISTER with Instance ID (sip.instance);

Figure 10 is a message flow chart illustrating a device Registration with unprotected DevID in Instance ID;

Figure 11 is an example REGISTER with Instance ID (sip.instance);

Figure 12 is an example 200 (OK) with GRUU;

Figure 13 is a message flow chart with a network registration on behalf of a CS UE with unprotected DevID in Instance ID;

Figure 14 is an Example REGISTER with Instance ID (sip.instance); and

Figure 15 is an Example 200 (OK) with GRUU.

## DETAILED DESCRIPTION

The present invention facilitates the creation of an Instance ID that will ensure uniqueness of the ID, while ensuring the privacy of existing equipment identities. The present invention also provides a mechanism to ensure that the network (MSC Server) and the device will create identical Instance IDs that are used in the creation of a GRUU. It makes use of the UUID format defined in RFC 4122.

Additionally, the present invention provides a mechanism for the network to provide privacy for the DevID even when the ID is not protected in the Instance ID that is sent to the network during registration. This aspect of the present invention uses the same techniques that are employed when the UE or MSC Server protects the DevID, but instead are performed by the registrar (S-CSCF).

As described herein, the device is assumed to be a 3GPP Mobile that supports GRUU and the creation of an Instance ID, however the present invention is applicable to any device where the network and the device share knowledge of a device specific identifier. In the case of a 3GPP device, the DevID is derived from the IMEI. In the case of a 3GPP2 device, the DevID is derived from the MEID or ESN.

For software based clients, and clients not fully conforming to the mobile standards, the IMEI (or equivalent) might not be available. Hence, in another embodiment of the present invention, the DevID is created based on the private user identity of the terminal. In such a scenario, a device may be represented by several private user identities, towards the registrar (one from the UE as such over the PS access, and one from the MSC server registering on behalf of the user). To ensure a consistent behavior, both the UE and the network performing the registration, need to select the DevID based on the private ID used by the network. Another benefit of using the private ID from the network as DevID would be that it becomes agnostic to the type of CS access used.

*Information common to both approaches*

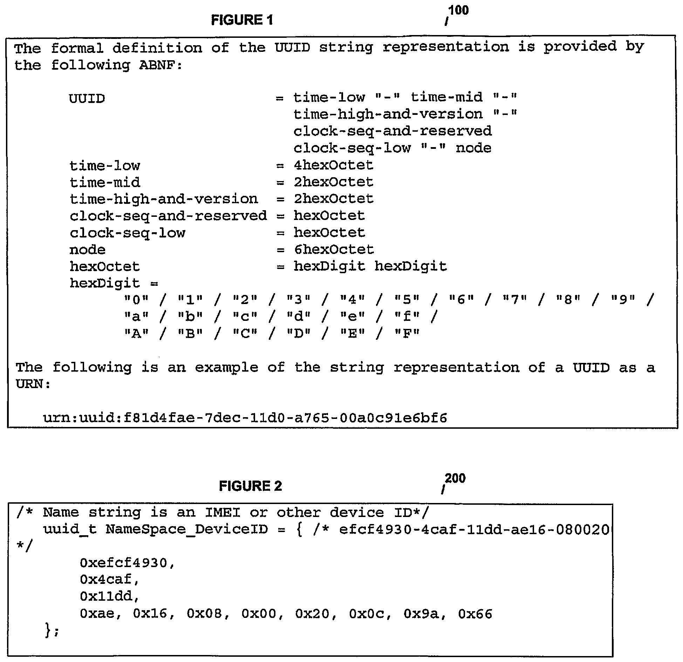

In the present invention, the name-based version of the UUID is used as described in RFC 4122. Either version 3 or version 5 can be used, the only difference being the type of hashing that is used (MD5 and SHA-1, respectively). As seen in table 100 of Figure 1, the Instance ID is constructed as a UUID URN using the string representation of a UUID as described in RFC 4122.

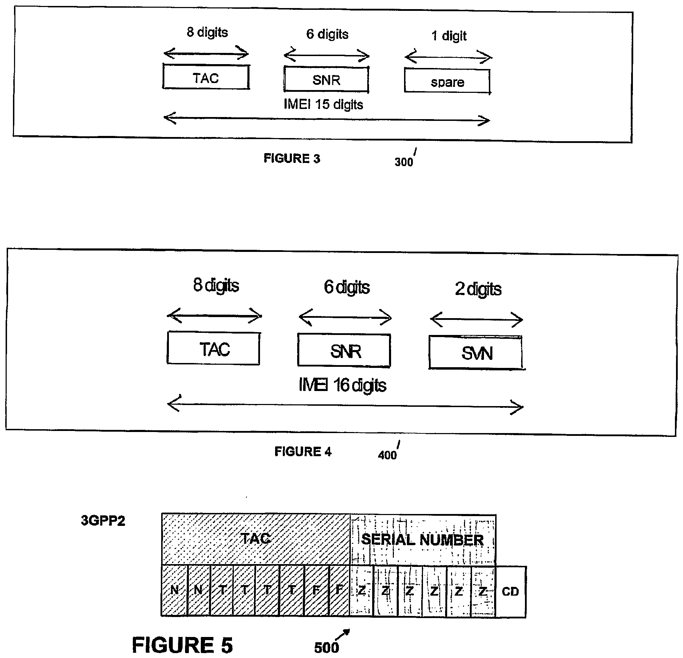

In order to create the final Instance ID, a name space ID is required. Table 200 of Figure 2 provides a definition of a name space that is used as an example herein. Further, Figure 3 illustrates the Unique Device Identifier 300 used in various standards. As seen therein, the IMEI is composed of the following elements (each element consisting of decimal digits only):

1. Type Allocation Code (TAC) 301. Its length is 8 digits;

2. Serial Number (SNR) 302 is an individual serial number uniquely identifying each equipment within the TAC. Its length is 6 digits;

3. Spare digit (check digit) 303: This digit is used as a Luhn checksum digit and is not transmitted with the IMEI.

The IMEI (14 digits) is complemented by a check digit. The check digit is not part of the digits transmitted.

Example DevID derivation:

3GPP IMEI:

TAC: 35196500
SNR: 718917
Check Digit: 7

$$DevID = TAC + SNR = 35196500718917$$

The IMEISV 400 as seen in Figure 4 is composed of the following elements (each element consists only of decimal digits):

1. Type Allocation Code (TAC) 401. Its length is 8 digits;
2. Serial Number (SNR) 402 is an individual serial number uniquely identifying each equipment within each TAC. Its length is 6 digits;
3. Software Version Number (SVN) 403 identifies the software version number of the mobile equipment. Its length is 2 digits.

Example DevID derivation:

3GPP EMEISV:

TAC: 35196500
SNR: 718917
SVN: 04

$$DevID = TAC + SNR = 35196500718917$$

In the MEID 500 of Figure 5, all of these fields are defined as hexadecimal values with the following valid range.
NN 501 valid range A-0
FF 502 globally administered
TTTTTT 503 valid range 000000 - FFFFFF
ZZZZZZ 504 valid range 000000 - FFFFFF
CD 505 valid range 0-F
The Check Digit (CD) 505 is not part of the MEID and is not transmitted when the MEID is transmitted.

Example DevID derivation:

3GPP2 MEID:

TAC: A1000000
SNR: 3F0D50
CD:

$$DevID = TAC + SNR = A10000003F0D50$$

The following are Identifier alternatives for devices without unique device IDs.

*Private ID solution (access agnostic)*

In some cases, there may not be a device specific ID, such as an IMEI, available to the client. For example, this would be the case when using a soft client. In this case the private identity can be used instead. The private identity takes the form of a Network Access Identifier (NAI) as defined in RFC 4282.
An example private identity for IMS is: user1_private@home1.net.

Example DevID derivation:

Private ID:

Private ID: user1_private@home1.net
DevID = Private ID = user1_private@home1.net

*Instance ID creation when providing DevID protection in the UE or network (MSC Server)*

As previously described, the preferred embodiment of the present invention is to protect the DevID at the UE or MSC Server, even during registration. Therefore, the DevID shall be encoded using the following steps.
Steps for creation of Instance ID at the UE or network (MSC Server) using a device specific ID, in this example using the IMEI as defined in 3GPP:

1. The network and device choose the same hash algorithm (MD5 or SHA-

1). This example illustrates the present invention using MD5.

2. Create a DevID by extracting the TAC and SNR from the IMEI (as seen in Figure 3). The spare digit is omitted for a total of 14 digits used. By omitting the spare digit, this method of the present invention is also applicable to the IMEISV where the SVN shall be omitted. For a non-3GPP devices using an identifier other than the IMEI, the only criteria for the DevID is that it be unique to the device and known by the network.
3. Place the name space ID (as seen in table 200 of Figure 2) and DevID in network byte order
4. Concatenate the name space ID and DevID
5. Compute the hash of the concatenated string using the preselected hash algorithm.
6. Set the UUID fields as specified in RFC 4122 subclause 4.3 using the hash as computed above and create the string representation as show in clause 3 of the RFC.
7. Place the string representation in urn form by prepending "urn:uuid" to the above string. Example: urn:uuid:3647f493-4948-abe2-6599-7c295ab29804
8. This UUID URN is the Instance ID to be used for this device and by the network when registering on behalf of this device.

*Example Call Flows providing DevID protection in the UE or network (MSC Server)*

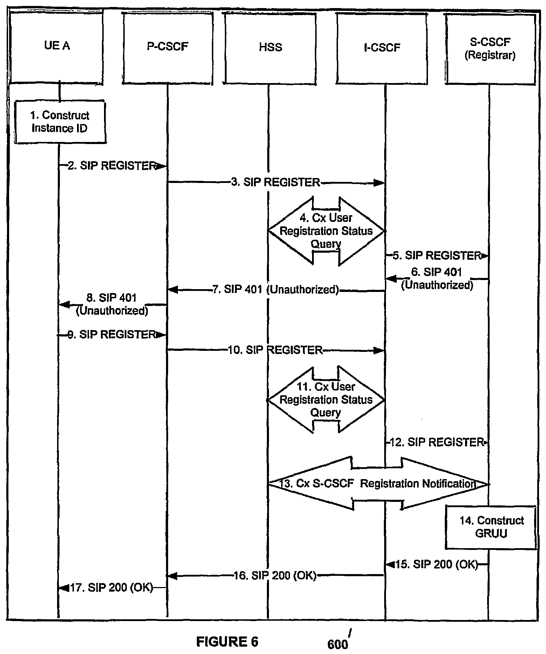

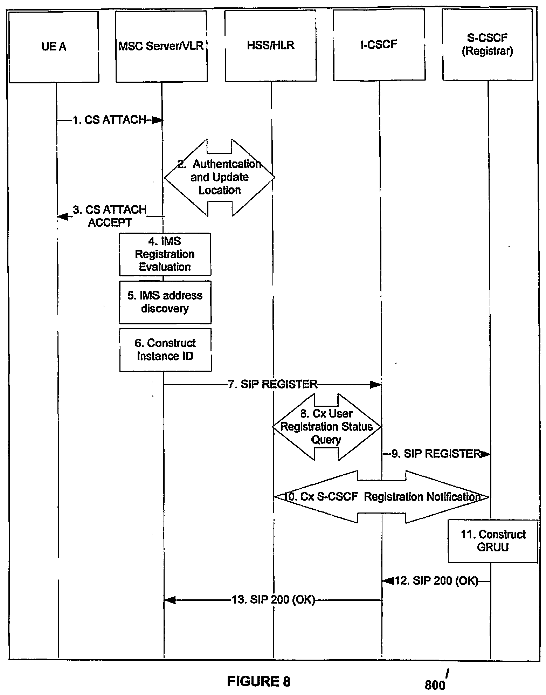

Figures 6 and 8 depict basic call flows 600, 800 illustrating the steps of the method of the present invention. These example call flows show an IMS-based network architecture, however, the present invention also applies to non-IMS architectures as well.
In Figure 6, a call flow 600 is illustrated wherein the mobile device registers itself directly in IMS (towards the registrar) using PS access. In Figure 8, a call flow 800 is illustrated wherein the network registers on behalf of a device that is using CS access.
In the interest of clarity, some details unrelated to the present invention have been omitted, including some of the SIP Headers in the examples below.

*Device Registration*

The basic registration flow for a device implementing the present invention are as seen in Figure 6. As seen therein:

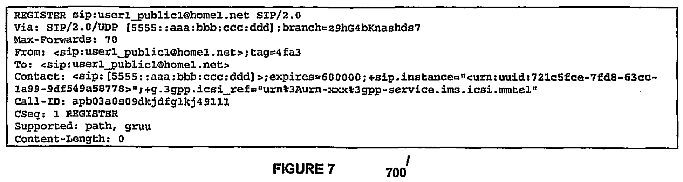

1. Construct Instance ID 601: UE A creates an Instance ID derived from its IMEI as described in this invention
2. REGISTER request (UE A to P-CSCF) 602. An example of this request is seen in the table 700 of Figure 7.
3. REGISTER request (P-CSCF to I-CSCF) 603. The P-CSCF forwards the request to the I-CSCF.
4. Cx User registration status query procedure 604. The I-CSCF makes a request for information related to the Subscriber registration status by sending the private user identity, public user identity and visited domain name to the HSS. The HSS returns the S-CSCF required capabilities and the I-CSCF uses this information to select a suitable S-CSCF.
5. REGISTER request (I-CSCF to S-CSCF) 605. I-CSCF forwards the REGISTER request to the selected S-CSCF.
6. 401 (Unauthorized) (S-CSCF to I-CSCF) 606. The S-CSCF challenges the registration request.
7. 401 (Unauthorized) (I-CSCF to P-CSCF) 607. The I-CSCF forwards the response to the P-CSCF.

8. 401 (Unauthorized) (P-CSCF to UE A) 608. The P-CSCF forwards the response to UE A.

9. REGISTER request (UE A to P-CSCF) 609. UE A resends the REGISTER request (as seen in step 602), this time with authentication credentials.

10. REGISTER request (P-CSCF to I-CSCF) 610. The P-CSCF forwards the request to the I-CSCF.

11. Cx: User registration status query procedure 611. The I-CSCF makes a request for information related to the Subscriber registration status by sending the private user identity, public user identity and visited domain name to the HSS. The HSS returns the S-CSCF required capabilities and the I-CSCF uses this information to select a suitable S-CSCF.

12. REGISTER request (I-CSCF to S-CSCF) 612. I-CSCF forwards the REGISTER request to the selected S-CSCF.

13. Cx: S-CSCF Registration Notification 613. The S-CSCF informs the HSS that the user has been registered. Upon being requested by the S-CSCF, the HSS will also include the user profile in the response sent to the S-CSCF.

14. Construct GRUU 614. The S-CSCF (acting as the registrar) constructs a GRUU based on the Instance ID that was created in step 601. The GRUU shall be constructed as defined in draft-ietf-sip-gruu.

15. 200 (OK) (S-CSCF to I-CSCF) 615: The S-CSCF sends a 200 (OK) response to the I-CSCF indicating that Registration was successful. The 200 (OK) response includes the GRUU that was created in the previous step.

16. 200 (OK) (I-CSCF to P-CSCF) 616: The I-CSCF forwards the 200 (OK) response to the P-CSCF indicating that Registration was successful.

17. 200 (OK) (P-CSCF to UE A) 617: The P-CSCF forwards the 200 (OK) response to UE A indicating that Registration was successful.

*Network Registration*

Figure 8 illustrates an enhanced call flow 800 which improves the call flow of 3GPP TS 24.292 by adding the functionality provided by the present invention. The details of the signalling flow are as follows:

1. CS attach (UE A to MSC) 801.

2. Authentication and Update Location (MSC/VLR to HLR/HSS) 802.

3. CS attach accept (MSC to UE A) 803.

4. IMS Registration evaluation 804. The MSC Server evaluates whether it needs to perform registration with IMS. This can be based on subscriber data received from the HSS/HLR.

5. IMS address discovery 805. The MSC Server derives a home network domain name. The home network domain is used to perform DNS queries to locate the I-CSCF in the home network.

6. Construct Instance ID 806. The MSC Server creates an Instance ID derived from the IMEI of UE A as described in the present invention

7. REGISTER request (MSC Server to I-CSCF) 807. The purpose of this request is to register a private user identity and a temporary public user identity derived for this subscriber on behalf of the user with a S-CSCF in the home network. This request is routed to the I-CSCF in the home network.

8. Cx: User registration status query procedure 808. The I-CSCF makes a request for information related to the Subscriber registration status by sending the private user identity, public user identity and visited domain name to the HSS. The HSS returns the S-CSCF required capabilities and the I-CSCF uses this information to select a suitable S-CSCF.

9. REGISTER request (I-CSCF to S-CSCF) 809. I-CSCF forwards the REGISTER request to the selected S-CSCF.

10. Cx: S-CSCF Registration Notification 810. The S-CSCF informs the HSS that the user has been registered. Upon being requested by the S-CSCF, the HSS will also include the user profile in the response sent to the S-CSCF.

11. Construct GRUU 811. The S-CSCF (acting as the registrar) constructs a GRUU based on the Instance ID that was created in step 806 above. The GRUU shall be constructed as defined in draft-ietf-sip-gruu. Because the Instance ID is the same that the device would have generated, the GRUU that is created will also be identical to one that would be returned to a device registering directly.

12. 200 (OK) (S-CSCF to I-CSCF) 812. The S-CSCF sends a 200 (OK) response to the I-CSCF indicating that Registration was successful. The 200 (OK) response includes the GRUU that was created in the previous step.

13. 200 (OK) (I-CSCF to MSC Server) 813. The I-CSCF forwards the 200 (OK) response to the MSC Server indicating that Registration was successful. It should be noted that the GRUU creation by the registrar (S-CSCF) is not protected during registration

Optimally, the DevID would be protected even during registration, however there may be circumstances where the DevID is sent plain text unencrypted as the Instance ID during registration. In order to provide some level of privacy protection for the user it is necessary to define procedures in the network for constructing the GRUU based on the Instance ID in a way that does not reveal the DevID.

An additional embodiment of the present invention uses the same techniques that were described above for the creation of an Instance ID which protected the DevID. However, in this scenario the registrar (S-CSCF) will apply those techniques to the creation of the "gr" parameter of the GRUU instead of the Instance ID.

*DevID format when transported plain text unencrypted in an Instance ID*

As specified in the draft-ietf-sip-outbound, any Instance ID must use a URN scheme. An embodiment of the present invention has been described herein of using an RFC 4122 based URN when sending a protected DevID as the Instance ID. However, when sending a DevID format as unencrypted plain text, there is currently no finalized RFC for which to refer. Therefore, it is only possible to give examples of what a URN for the DevID might look like. The final format of such a URN may not be identical to the examples presented here, however the principles described should still apply to other formats that carry the same information.

One proposed format for an IMEI based DevID is described in draft-montemurro-gsma-imei-urn. An example Instance ID based on that draft is as follows:

3GPP IMEI:

> TAC: 35196500
> SNR: 718917
> Check Digit: 7
> +sip.instance="<urn:gsma:imei:35196500-718917-0>"

It should be noted that the zero (0) at the end represents the spare digit which is always transmitted as zero (0).

The registrar uses the received URN format in the Instance ID (+sip.instance) to determine what handling to apply. In this example, receipt of the urn:gsma:imei would be a trigger to apply the procedures of the present invention.

*Steps for GRUU creation by the registrar (S-CSCF) when the DevID is not protected during registration*

The steps of creating the GRUU by the registrar (S-CSCF) based on an unprotected DevID in the Instance ID are :

1. Prerequisite: The REGISTER message has arrived at the registrar (S-CSCF) and the registrar (S-CSCF) has identified that the Instance ID contains a DevID sent plain text unencrypted based on the URN scheme used in the Instance ID. (In this example: "urn:gsma:imei");
2. The registrar (S-CSCF) selects a hash algorithm (MD5 or SHA-1). This example uses MD5;
3. Extract the TAC and SNR from the IMEI (the IMEI structure in the URN has previously been illustrated). The TAC and SNR are used and the spare digit is omitted for a total of 14 digits used. By omitting the spare digit, this technique is also applicable to the IMEISV where the SVN shall be omitted;
4. Place the name space ID, as seen in table 200 of Figure 2, TAC and SNR in network byte order;
5. Concatenate the name space ID, TAC and SNR;
6. Compute the hash of the concatenated string using the preselected hash algorithm;
7. Set the UUID fields as specified in RFC 4122 subclause 4.3 using the hash as computed above and create the string representation as show in clause 3 of the RFC;
8. Place the string representation in urn form by prepending "urn:uuid" to the above string. Example: urn:uuid:3647f493-4948-abe2-6599-7c295ab29804;and
9. This UUID URN is the "gr" parameter of the GRUU to be assigned based on the received Instance ID.

In the case of a non-3GPP device where an identification other than an IMEI is used, the only criteria is that the contents of the Instance ID is unique to the device and does not change over time.

An alternative embodiment of the present invention can be implemented by the registrar where the URN format is not recognized or in the case of a non-3GPP device which may not have an IMEI equivalent. In these cases the registrar could use the following steps:

1. The registrar (S-CSCF) selects a hash algorithm (MD5 or SHA-1). The present example is illustrated using MD5;
2. Extract the name space specific (NSS) string from the URN (defined in RFC 2141)_from the Instance ID (+sip.instance);
3. Place the NSS in network byte order;
4. Compute the hash of the NSS;
5. This hashed value is the "gr" parameter of the GRUU to be assigned based on the received Instance ID.

*Example Call Flows providing DevID protection in the registrar*

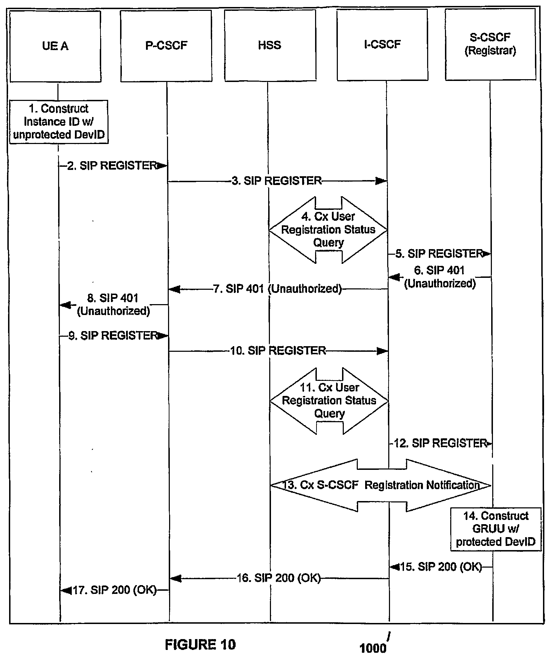

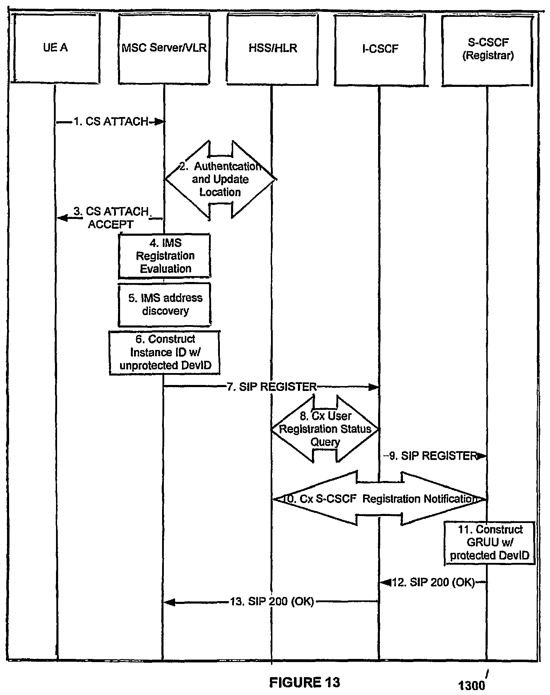

Referring now to Figures 10 and 13, basic call flows implementing the present invention are illustrated. These example call flows illustrate an IMS-based network architecture, however, the present invention is applicable to non-IMS architectures as well.

The call flow of Figure 10 illustrates the mobile device registering itself directly in IMS (towards the registrar) using PS access. The call flow of Figure 13 illustrates the call flow when the network registers on behalf of a device that is using CS access.

Some details not related to the present invention illustrated in Fioqures 10 and 13 have been omitted for clarity. This includes some of the SIP Headers in the examples.

Device Registration

Figure 10 provides the basic registration flow 1000 for a device implementing the present invention. The details of the signalling flows are as follows:

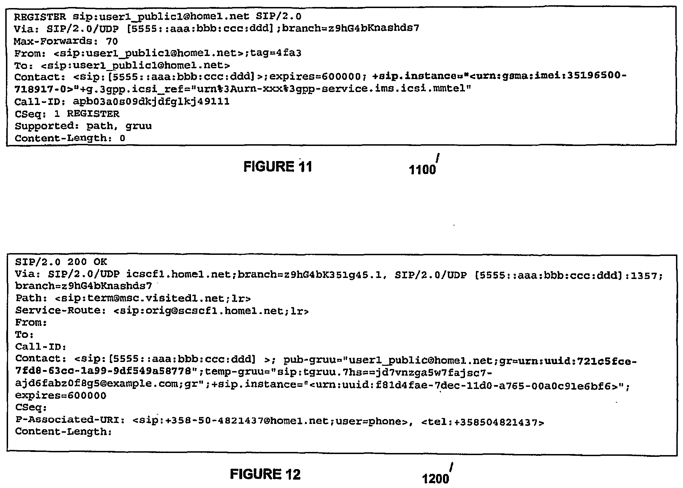

1. Construct Instance ID 1001: UE A creates an Instance ID using a URN format which transports the IMEI in clear text
2. REGISTER request (UE A to P-CSCF) 1002: See table 1100 of Figure 11.
3. REGISTER request (P-CSCF to I-CSCF) 1003: The P-CSCF forwards the request to the I-CSCF.
4. Cx: User registration status query procedure 1004: The I-CSCF requests information related to the Subscriber registration status by sending the private user identity, public user identity and visited domain name to the HSS. The HSS returns the S-CSCF required capabilities and the I-CSCF uses this information to select a suitable S-CSCF.
5. REGISTER request (I-CSCF to S-CSCF) 1005: I-CSCF forwards the REGISTER request to the selected S-CSCF.
6. 401 (Unauthorized) (S-CSCF to I-CSCF) 1006: The S-CSCF challenges the registration request.
7. 401 (Unauthorized) (I-CSCF to P-CSCF) 1007: The I-CSCF forwards the response to the P-CSCF.
8. 401 (Unauthorized) (P-CSCF to UE A) 1008: The P-CSCF forwards the response to UE A.
9. REGISTER request (UE A to P-CSCF) 1009: UE A resends the REGISTER request (as seen in step 1002), this time with authentication credentials.
10. REGISTER request (P-CSCF to I-CSCF) 1010: The P-CSCF forwards the request to the I-CSCF.
11. Cx: User registration status query procedure 1011: The I-CSCF requests information related to the Subscriber registration status by sending the private user identity, public user identity and visited domain name to the HSS. The HSS returns the S-CSCF required capabilities and the I-CSCF uses this information to select a suitable S-CSCF.
12. REGISTER request (I-CSCF to S-CSCF) 1012: I-CSCF forwards the REGISTER request to the selected S-CSCF.
13. Cx: S-CSCF Registration Notification 1013: The S-CSCF informs the HSS that the user has been registered. Upon being requested by the S-CSCF, the HSS will also include the user profile in the response sent to the S-CSCF.
14. Construct GRUU 1014: The S-CSCF (acting as the registrar) constructs a GRUU based on the Instance ID that was sent in step 1001. The GRUU shall be constructed as hereinbefore described (see steps for GRUU creation by the registrar (S-CSCF) when the DevID is not protected during registration and table 1201 of Figure 12)
15. 200 (OK) (S-CSCF to I-CSCF) 1015: The S-CSCF sends a 200 (OK) response to the I-CSCF indicating that Registration was successful. The 200 (OK) response includes the GRUU that was created in the previous step.
16. 200 (OK) (I-CSCF to P-CSCF) 1016: The I-CSCF forwards the 200 (OK) response to the P-CSCF indicating that Registration was successful.
17. 200 (OK) (P-CSCF to UE A) 1017: The P-CSCF forwards the 200 (OK) response to UE A indicating that Registration was successful.

*Network Registration*

Figure 13 illustrates an improved call flow 1300 over that described in 3GPP TS 24.292. The details of the signalling flows are as follows:

1. CS attach (UE A to MSC) 1301;
2. Authentication and Update Location (MSC/VLR to HLR/HSS) 1302;
3. CS attach accept (MSC to UE A) 1303;
4. IMS Registration evaluation 1304: The MSC Server evaluates whether it needs to perform registration with IMS. This can be based on subscriber data received from the HSS/HLR;
5. IMS address discovery 1305: The MSC Server derives a home network domain name. The home network domain is used to perform DNS queries to locate the I-CSCF in the home network;
6. Construct Instance ID 1306: The MSC Server creates an Instance ID using a URN format which transports the IMEI in clear text;

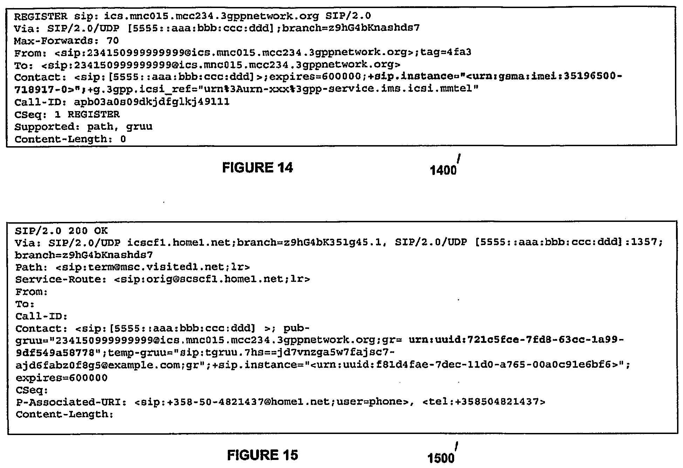

7. REGISTER request (MSC Server to I-CSCF) 1307: This request registers a private user identity and a temporary public user identity derived for this subscriber on behalf of the user with a S-CSCF in the home network. This request is routed to the I-CSCF in the home network. See table 1400 of Figure 14.

8. Cx: User registration status query procedure 1308: The I-CSCF makes a request for information related to the Subscriber registration status by sending the private user identity, public user identity and visited domain name to the HSS. The HSS returns the S-CSCF required capabilities and the I-CSCF uses this information to select a suitable S-CSCF.

9. REGISTER request (I-CSCF to S-CSCF) 1309: I-CSCF forwards the REGISTER request to the selected S-CSCF.

10. Cx: S-CSCF Registration Notification 1310: The S-CSCF informs the HSS that the user has been registered. Upon being requested by the S-CSCF, the HSS will also include the user profile in the response sent to the S-CSCF.

11. Construct GRUU 1311: The S-CSCF, acting as the registrar, constructs a GRUU based on the Instance ID that was sent in step 1306. The GRUU shall be constructed as described herein. Refer to the steps for GRUU creation by the registrar (S-CSCF) when the DevID is not protected during registration. See table 1500 of Figure 15.

12. 200 (OK) (S-CSCF to I-CSCF) 1312: The S-CSCF sends a 200 (OK) response to the I-CSCF indicating that Registration was successful. The 200 (OK) response includes the GRUU that was created in the previous step.

13. 200 (OK) (I-CSCF to MSC Server) 1313: The I-CSCF forwards the 200 (OK) response to the MSC Server indicating that Registration was successful.

As seen hereinabove, the present invention comprises a method and apparatus for signaling between a device and network. The method comprises the step of generating, by a device, an Instance Identification (ID) that matches an Instance ID used by a network. The apparatus of the present invention includes a means of generating an ID that matches the Instance ID used by the network. The means, as more fully described below, can be implemented in computer hardware and software. In either the method or apparatus, the Instance ID is based on a unique identifier that belongs to the device but is also known to the network (DevID). The creation of the Instance ID can be based on a hash to protect the DevID and a shared namespace that is used by both the network and the device when encoding the DevID into an Instance ID. In some instances, the Instance ID would not contain information about the DevID passed as unencrypted plaintext. Further, in the present invention, (i) a registrar in the network can be adapted to protect the Instance ID; (ii) the creation of the Instance ID can be based on using the DevID directly as a URN into an Instance ID; (iii) the Instance ID can contain information about the DevID passed as unencrypted plaintext, wherein, in an embodiment, the creation of the "gr" parameter of the GRUU is based on a hash to protect the DevID and in a further embodiment, the creation of the hashed parameter can be based on the concatenation of the DevID and a namespace and applying the hashing algorithm. In the present invention, the Instance ID can be based on an IMEI, an MEID, on a private user identity in the form of a NAI or on a URN format that is not recognized by the registrar. Where the Instance ID is based on a URN format, the creation of the "gr" parameter of the GRUU is based on a hash to protect the unknown URN format.

The present invention provides several advantages over the proposed solutions. Most notably, it ensures that any Instance ID created by a network will be identical to an Instance ID created by the device. This, in turn, results in the same GRUU being defined regardless of how the device is registered (directly or by the network). Further, it provides specific steps to outline the creation of the Instance ID, particularly in the case of an IMS system. This fills a gap currently open in the existing 3GPP specifications. The present invention ensures consistent behavior for IMS-based services such as ICS. The present invention uses a hash to derive the Instance ID thus protecting the device specific identifier (such as IMEI, MEID, etc). The present invention protects the integrity of the device specific identifier, thus enhancing security.

The apparatus and means of the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. It is intended that the present invention not be limited to the particular embodiment disclosed, but that the present invention will include all embodiments falling within the scope of the appended claims.

**Claims**

1. A method for signaling between a device and network, comprising the steps of:

    generating, by a device, an Instance Identification, ID, (100) that matches an Instance ID used by a network for assigning a Globally Routable User Agent URI, GRUU wherein the Instance ID (100) is based on a unique identifier (300, 400, 500) that belongs to the device but is also known to the network, DevID, wherein the creation of the Instance ID is based on a hash to protect the DevID and a shared namespace (200) that is used by both the network and the device when encoding the DevID into an Instance ID (100).

2. A method for signaling between a device and network, comprising the steps of:

    generating, by a device, an Instance Identification, ID, (100) that matches an Instance ID used by a network for assigning a Globally Routable User Agent URI, GRUU,
    wherein the Instance ID (100) is based on a unique identifier (300, 400, 500) that belongs to the device but is also known to the network, DevID,
    wherein the Instance ID (100) containing information about the DevID is passed as unencrypted plaintext and wherein the creation of the "gr" parameter of the GRUU is based on a hash to protect the DevID.

3. The method of Claim 2, wherein the Instance ID (100) is based on one of an IMEI, an MEID, a private user identity in the form of a NAI, and a URN format that is not recognized by a registrar.

4. The method of claim 3, wherein the creation of the "gr" parameter of the GRUU is based on a hash to protect the unknown URN format.

5. The method of Claim 1, wherein the Instance ID (100) does not contain information about the DevID passed as unencrypted plaintext.

6. The method of Claim 1, wherein a registrar in the network is adapted to protect the Instance ID (100).

7. The method of Claim 2, wherein the creation of the Instance ID (100) is based on using the DevID directly as a URN into an Instance ID (100).

8. An apparatus for signaling between a device and network, comprising:

    means for generating, by a device, an Instance Identification, ID, (100) that matches an Instance ID used by a network for assigning a Globally Routable User Agent URI, GRUU,
    wherein the Instance ID (100) is based on a unique identifier (300, 400, 500) that belongs to the device but is also known to the network, DevID,
    wherein the creation of the Instance ID (100) is based on a hash to protect the DevID and a shared namespace (200) that is used by both the network and the device when encoding the DevID into an Instance ID (100).

9. An apparatus for signaling between a device and network, comprising:

    means for generating, by a device, an Instance Identification, ID, (100) that matches an Instance ID used by a network for assigning a Globally Routable User Agent URI, GRUU,
    wherein the Instance ID (100) is based on a unique identifier (300, 400, 500) that belongs to the device but is also known to the network DevID,
    wherein the Instance ID (100) containing information about the DevID is passed as unencrypted plaintext and wherein the creation of the "gr" parameter of the GRUU is based on a hash to protect the DevID.

10. The apparatus of Claim 9, wherein the Instance ID (100) is based on one of an IMEI, an MEID, a private user identity in the form of a NAI, and on a URN format that is not recognized by a registrar.

11. The apparatus of Claim 10, wherein the creation of the "gr" parameter of the GRUU is based on a hash to protect the unknown URN format.

12. The apparatus of Claim 8

, wherein the Instance ID (100) does not contain information about the DevID passed as unencrypted plaintext.

13. The apparatus of Claim 8

, wherein a registrar in the network is adapted to protect the Instance ID (100).

**Patentansprüche**

1. Verfahren für eine Signalisierung zwischen einer Vorrichtung und einem Netzwerk, mit den Schritten zum:

Erzeugen, durch eine Vorrichtung, einer Instanz-Identifikation, ID, (100), die mit einer Instanz-ID übereinstimmt, die verwendet wird durch ein Netzwerk zum Zuweisen einer Globally-Routable-User-Agent URI, GRUU, wobei die Instanz-ID (100) auf einem eindeutigen Identifikator (300, 400, 500) basiert, der zu der Vorrichtung gehört, jedoch auch dem Netzwerk bekannt ist, DevID, wobei die Erzeugung der Instanz-ID auf einem Hash zum Schutz der DevID und einem gemeinsam verwendeten Namespace (200) basiert, der durch sowohl das Netzwerk als auch die Vorrichtung verwendet wird, wenn die DevID in einer Instanz-ID (100) codiert wird.

2. Verfahren für eine Signalisierung zwischen einer Vorrichtung und einem Netzwerk, mit den Schritten zum:

Erzeugen, durch eine Vorrichtung, einer Instanz-Identifikation, ID, (100), die mit einer Instanz-ID übereinstimmt, die verwendet wird durch ein Netzwerk zum Zuweisen einer Globally-Routable-User-Agent URI, GRUU, wobei die Instanz-ID (100) auf einem eindeutigen Identifikator (300, 400, 500) basiert, der zu der Vorrichtung gehört, jedoch auch dem Netzwerk bekannt ist, DevID, wobei die Instanz-ID (100), die eine Information über die DevID enthält, als ein unverschlüsselter Plaintext weiter gegeben wird, und wobei die Erzeugung des "gr"-Parameters der GRUU auf einem Hash zum Schutz der DevID basiert.

3. Verfahren nach Anspruch 2, wobei die Instanz-ID (100) auf einem von einer IMEI, einer MEID, einer Privatnutzer-Identität in der Form einer NAI und einem URN-Format, das durch ein Registrationsmittel nicht erkannt wird, basiert.

4. Verfahren nach Anspruch 3, wobei die Erzeugung des "gr"-Parameters der GRUU auf einem Hash zum Schutz des unbekannten URN-Formats basiert.

5. Verfahren nach Anspruch 1, wobei die Instanz-ID (100) keine Information bezüglich der DevID enthält, die als unverschlüsselter Plaintext weitergegeben wird.

6. Verfahren nach Anspruch 1, wobei ein Registrationsmittel in dem Netzwerk ausgebildet ist zum Schutz der Instanz-ID (100).

7. Verfahren nach Anspruch 2, wobei die Erzeugung der Instanz-ID (100) auf einer Verwendung der DevID direkt als eine URN in einer Instanz-ID (100) basiert.

8. Vorrichtung für eine Signalisierung zwischen einer Vorrichtung und einem Netzwerk, umfassend:

Mittel zum Erzeugen, durch eine Vorrichtung, einer Instanz-Identifikation, ID, (100), die mit einer Instanz-ID übereinstimmt, die durch ein Netzwerk verwendet wird zum Zuweisen einer Globally-Routable-User-Agent URI, GRUU, wobei die Instanz-ID (100) auf einem eindeutigen Identifikator (300, 400, 500) basiert, der zu der Vorrichtung gehört, jedoch auch dem Netzwerk, bekannt ist, DevID, wobei die Erzeugung der Instanz-ID (100) auf einem Hash zum Schutz der DevID und einem gemeinsam verwendeten Namespace (200) basiert, der durch sowohl das Netzwerk als auch die Vorrichtung verwendet wird, wenn die DevID in einer Instanz-ID (100) codiert wird.

9. Vorrichtung für eine Signalisierung zwischen einer Vorrichtung und einem Netzwerk, umfassend:

Mittel, zum Erzeugen, durch eine Vorrichtung, einer Instanz-Identifikation, ID, (100), die mit einer Instanz-ID übereinstimmt, die durch ein Netzwerk verwendet wird zum Zuweisen einer Globally-Routable-User-Agent URI, GRUU, wobei die Instanz-ID (100) auf einem eindeutigen Identifikator (300, 400, 500) basiert, der zu der Vorrichtung gehört, jedoch auch dem Netzwerk bekannt ist, DevID, wobei die Instanz-ID (100), die eine Information über die DevID enthält, als ein unverschlüsselter Plaintext weiter gegeben wird, und wobei die Erzeugung des "gr"-Parameters der GRUU auf einem Hash zum Schutz der DevID basiert.

10. Vorrichtung nach Anspruch 9, wobei die Instanz-ID (100) auf einem von einer IMEI, einer MEID, einer Privatnutzer-Identität in der Form einer NAI und einem URN-Format, das durch ein Registrationsmittel nicht erkannt wird, basiert.

11. Vorrichtung nach Anspruch 10, wobei die Erzeugung des "gr"-Parameters der GRUU auf einem Hash zum Schutz des unbekannten URN-Formats basiert.

12. Vorrichtung nach Anspruch 8, wobei die Instanz-ID (100) keine Information bezüglich der DevID enthält, die als ein unverschlüsselter Plaintext weitergegeben wird.

13. Vorrichtung nach Anspruch 8, wobei ein Registrationsmittel in dem Netzwerk ausgebildet ist zum Schutz der Instanz-ID (100).

## Revendications

1. Procédé de signalisation entre un dispositif et un réseau, comprenant l'étape consistant :

à générer, par un dispositif, une Identification d'Instance, ID, (100) qui correspond à une ID d'Instance utilisée par un réseau pour l'attribution d'un URI d'Agent Utilisateur Globalement Routable, GRUU, où l'ID d'Instance (100) est basée sur un identifiant unique (300, 400, 500) qui appartient au dispositif mais qui est également connu du réseau, DevID, où la création de l'ID d'Instance est basée sur un hachage pour protéger le DevID et un espace de noms partagé (200) qui est utilisé par le réseau et par le dispositif lors du codage du DevID dans une ID d'Instance (100).

2. Procédé de signalisation entre un dispositif et un réseau, comprenant l'étape consistant :

à générer, par un dispositif, une Identification d'Instance, ID, (100) qui correspond à une ID d'Instance utilisée par un réseau pour l'attribution d'un URI d'Agent Utilisateur Globalement Routable, GRUU, où l'ID d'Instance (100) est basée sur un identifiant unique (300, 400, 500) qui appartient au dispositif mais qui est également connu du réseau, DevID, où l'ID d'Instance (100) contenant des informations concernant le DevID transmises en tant que texte en clair non chiffré et où la création du paramètre "gr" du GRUU est basée sur un hachage pour protéger le DevID.

3. Procédé de la revendication 2, dans lequel l'ID d'Instance (100) est basée sur l'un(e) entre une IMEI, un MEID, une identité d'utilisateur privée sous la forme d'un NAI et un format URN qui n'est pas reconnu par un registraire.

4. Procédé de la revendication 3, dans lequel la création du paramètre "gr" du GRUU est basée sur un hachage pour protéger le format URN inconnu.

5. Procédé de la revendication 1, dans lequel l'ID d'Instance (100) ne contient pas d'informations concernant le DevID transmises en tant que texte en clair non chiffré.

6. Procédé de la revendication 1, dans lequel un registraire dans le réseau est adapté pour protéger l'ID d'Instance (100).

7. Procédé de la revendication 2, dans lequel la création de l'ID d'Instance (100) est basée sur l'utilisation du DevID directement comme URN dans une ID d'Instance (100).

8. Appareil de signalisation entre un dispositif et un réseau, comprenant :

un moyen pour générer, par un dispositif, une Identification d'Instance, ID, (100) qui correspond à une ID d'Instance utilisée par un réseau pour l'attribution d'un URI d'Agent Utilisateur Globalement Routable, GRUU,

dans lequel l'ID d'Instance (100) est basée sur un identifiant unique (300, 400, 500) qui appartient au dispositif mais qui est également connu du réseau, DevID,

dans lequel la création de l'ID d'Instance (100) est basée sur un hachage pour protéger le DevID et un espace de noms partagé (200) qui est utilisé par le réseau et par le dispositif lors du codage du DevID dans une ID d'Instance (100).

9. Appareil de signalisation entre un dispositif et un réseau, comprenant :

un moyen pour générer, par un dispositif, une Identification d'Instance, ID, (100) qui correspond à une ID d'Instance utilisée par un réseau pour l'attribution d'un URI d'Agent Utilisateur Globalement Routable, GRUU, dans lequel l'ID d'Instance (100) est basée sur un identificateur unique (300, 400, 500) qui appartient au dispositif mais qui est également connu du réseau DevID,

dans lequel l'ID d'Instance (100) contenant des informations concernant le DevID transmises en tant que texte en clair non chiffré et dans lequel la création du paramètre "gr" du GRUU est basée sur un hachage pour protéger le DevID.

10. Appareil de la revendication 9, dans lequel l'ID d'Instance (100) est basée sur l'un(e) entre une IMEI, un MEID, une identité d'utilisateur privée sous la forme d'un NAI, et sur un format URN qui n'est pas reconnu par un registraire.

11. Appareil de la revendication 10, dans lequel la création du paramètre "gr" du GRUU est basée sur un hachage pour protéger le format URN inconnu.

12. Appareil de la revendication 8,
dans lequel l'ID d'Instance (100) ne contient pas d'informations concernant le DevID transmises en tant que texte en clair non chiffré.

13. Appareil de la revendication 8,
dans lequel un registraire dans le réseau est adapté pour protéger l'ID d'Instance (100).

**FIGURE 1** *100*

```
The formal definition of the UUID string representation is provided by
the following ABNF:

      UUID                    = time-low "-" time-mid "-"
                                time-high-and-version "-"
                                clock-seq-and-reserved
                                clock-seq-low "-" node
      time-low                = 4hexOctet
      time-mid                = 2hexOctet
      time-high-and-version   = 2hexOctet
      clock-seq-and-reserved  = hexOctet
      clock-seq-low           = hexOctet
      node                    = 6hexOctet
      hexOctet                = hexDigit hexDigit
      hexDigit =
            "0" / "1" / "2" / "3" / "4" / "5" / "6" / "7" / "8" / "9" /
            "a" / "b" / "c" / "d" / "e" / "f" /
            "A" / "B" / "C" / "D" / "E" / "F"

The following is an example of the string representation of a UUID as a
URN:

    urn:uuid:f81d4fae-7dec-11d0-a765-00a0c91e6bf6
```

**FIGURE 2** *200*

```
/* Name string is an IMEI or other device ID*/
   uuid_t NameSpace_DeviceID = { /* efcf4930-4caf-11dd-ae16-080020
*/
        0xefcf4930,
        0x4caf,
        0x11dd,
        0xae, 0x16, 0x08, 0x00, 0x20, 0x0c, 0x9a, 0x66
    };
```

15

8 digits                    6 digits                    1 digit

TAC                         SNR                         spare

IMEI 15 digits

**FIGURE 3**              300

8 digits                    6 digits                    2 digits

TAC                         SNR                         SVN

IMEI 16 digits

**FIGURE 4**              400

3GPP2

| TAC | SERIAL NUMBER | |
|---|---|---|
| N N T T T T F F | Z Z Z Z Z Z | CD |

**FIGURE 5**              500

**FIGURE 6** 600

17

```
REGISTER sip:user1_public1@home1.net SIP/2.0
Via: SIP/2.0/UDP [5555::aaa:bbb:ccc:ddd];branch=z9hG4bKnashds7
Max-Forwards: 70
From: <sip:user1_public1@home1.net>;tag=4fa3
To: <sip:user1_public1@home1.net>
Contact: <sip:[5555::aaa:bbb:ccc:ddd]>;expires=600000;+sip.instance="<urn:uuid:721c5fce-7fd8-63cc-
1a99-9df549a58778>";+g.3gpp.icsi_ref="urn%3Aurn-xxx%3gpp-service.ims.icsi.mmtel"
Call-ID: apb03a0s09dkjdfglkj49111
CSeq: 1 REGISTER
Supported: path, gruu
Content-Length: 0
```

**FIGURE 7** 700

EP 2 321 947 B1

FIGURE 8                                        800'

19

```
REGISTER sip: ics.mnc015.mcc234.3gppnetwork.org SIP/2.0
Via: SIP/2.0/UDP [5555::aaa:bbb:ccc:ddd];branch=z9hG4bKnashds7
Max-Forwards: 70
From: <sip:234150999999999@ics.mnc015.mcc234.3gppnetwork.org>;tag=4fa3
To: <sip:234150999999999@ics.mnc015.mcc234.3gppnetwork.org>
Contact:
<sip:[5555::aaa:bbb:ccc:ddd]>;expires=600000;+sip.instance="<urn:uuid:
721c5fce-7fd8-63cc-1a99-
9df549a58778>";+g.3gpp.icsi_ref="urn%3Aurn-xxx%3gpp-service.ims.icsi.mmtel"
Call-ID: apb03a0s09dkjdfglkj49111
CSeq: 1 REGISTER
Supported: path, gruu
Content-Length: 0
```

FIGURE 9                    900′

20

EP 2 321 947 B1

FIGURE 10    1000

21

```
REGISTER sip:user1_public1@home1.net SIP/2.0
Via: SIP/2.0/UDP [5555::aaa:bbb:ccc:ddd];branch=z9hG4bKnashds7
Max-Forwards: 70
From: <sip:user1_public1@home1.net>;tag=4fa3
To: <sip:user1_public1@home1.net>
Contact: <sip:[5555::aaa:bbb:ccc:ddd]>;expires=600000; +sip.instance="<urn:gsma:imei:35196500-
718917-0>"+g.3gpp.icsi_ref="urn%3Aurn-xxx%3gpp-service.ims.icsi.mmtel"
Call-ID: apb03a0s09dkjdfg1kj49111
CSeq: 1 REGISTER
Supported: path, gruu
Content-Length: 0
```

<div align="center">

**FIGURE 11**          1100 /

</div>

```
SIP/2.0 200 OK
Via: SIP/2.0/UDP icscf1.home1.net;branch=z9hG4bK351g45.1, SIP/2.0/UDP [5555::aaa:bbb:ccc:ddd]:1357;
branch=z9hG4bKnashds7
Path: <sip:term@msc.visited1.net;lr>
Service-Route: <sip:orig@scscf1.home1.net;lr>
From:
To:
Call-ID:
Contact: <sip:[5555::aaa:bbb:ccc:ddd] >; pub-gruu="user1_public@home1.net;gr=urn:uuid:721c5fce-
7fd8-63cc-1a99-9df549a58778";temp-gruu="sip:tgruu.7hs==jd7vnzga5w7fajsc7-
ajd6fabz0f8g5@example.com;gr";+sip.instance="<urn:uuid:f81d4fae-7dec-11d0-a765-00a0c91e6bf6>";
expires=600000
CSeq:
P-Associated-URI: <sip:+358-50-4821437@home1.net;user=phone>, <tel:+358504821437>
Content-Length:
```

<div align="center">

**FIGURE 12**          1200 /

</div>

FIGURE 13                                    1300

```
REGISTER sip: ics.mnc015.mcc234.3gppnetwork.org SIP/2.0
Via: SIP/2.0/UDP [5555::aaa:bbb:ccc:ddd];branch=z9hG4bKnashds7
Max-Forwards: 70
From: <sip:234150999999999@ics.mnc015.mcc234.3gppnetwork.org>;tag=4fa3
To: <sip:234150999999999@ics.mnc015.mcc234.3gppnetwork.org>
Contact: <sip:[5555::aaa:bbb:ccc:ddd]>;expires=600000;+sip.instance="<urn:gsma:imei:35196500-
718917-0>";+g.3gpp.icsi_ref="urn:3Aurn-xxx:3gpp-service.ims.icsi.mmtel"
Call-ID: apb03a0s09dkjdfglkj49111
CSeq: 1 REGISTER
Supported: path, gruu
Content-Length: 0
```

**FIGURE 14**                    1400 /

```
SIP/2.0 200 OK
Via: SIP/2.0/UDP icscf1.home1.net;branch=z9hG4bK351g45.1, SIP/2.0/UDP [5555::aaa:bbb:ccc:ddd]:1357;
branch=z9hG4bKnashds7
Path: <sip:term@msc.visited1.net;lr>
Service-Route: <sip:orig@scscf1.home1.net;lr>
From:
To:
Call-ID:
Contact: <sip:[5555::aaa:bbb:ccc:ddd] >; pub-
gruu="234150999999999@ics.mnc015.mcc234.3gppnetwork.org;gr= urn:uuid:721c5fce-7fd8-63cc-1a99-
9df549a58778";temp-gruu="sip:tgruu.7hs==jd7vnzga5w7fajsc7-
ajd6fabz0f8g5@example.com;gr";+sip.instance="<urn:uuid:f81d4fae-7dec-11d0-a765-00a0c91e6bf6>";
expires=600000
CSeq:
P-Associated-URI: <sip:+358-50-4821437@home1.net;user=phone>, <tel:+358504821437>
Content-Length:
```

**FIGURE 15**                    1500 /

**REFERENCES CITED IN THE DESCRIPTION**

**Patent documents cited in the description**

- EP 1737192 A
- EP 1843547 A2
- US 2008123625 A1